# EUROPEAN PATENT APPLICATION

(11) **EP 1 679 618 A1**
(43) Date of publication of application: **12.07.2006**
(21) Application number: 04030939.5
(22) Date of filing: 29.12.2004
(51) Int. Cl.: G06F 17/30

(54) **Global search for items using a request broker**

(71) Applicant: SAP AG, 69190 Walldorf (DE)
(72) Inventor: Pyka, Uwe, 74889 Sinsheim-Hilsbach (DE)
(74) Representative: Walter, Philipe

(57) **Abstract**

The disclosure relates in general to a method for searching for items using a request broker, wherein the method includes receiving a user request for an item comprising property values of local system properties, and searching within the local system for items in compliance with the user request. To enable a larger search, the method, in the event that no such item is found in the local system, may map the properties and property values of the user request into a standardized data structure of a search request, and may provide the search request to a request broker. The request broker may then provide the search request to third-party systems for further searching.

## Description

### TECHNICAL FIELD

The present disclosure relates in general to searching for items using standardized data structures.

### BACKGROUND

In enterprise solution systems, for example enterprise resource planning (ERP) systems, as provided by the applicant SAP Aktiengesellschaft, such as "SAP R/3", "mySAP.com", "mySAP", or "SAP NetWeaver", items within a company are listed electronically within databases. The databases allow accessing the stored items electronically and checking their current status, including, for example, availability. Each item can be stored as a business object. The availability of a particular item can be checked by searching the databases for the respective business objects corresponding to the item.

The systems can store properties of the respective items within the business objects. The properties can, for example, be any distinguishing features of the items. For example, an electric motor can be described at least partially by the properties "voltage," "power," "frequency," "torque," "type," "allowed voltage fluctuation," "allowed frequency fluctuation," and others. The property values of the respective properties can distinguish the particular item. For example, a particular electric motor may be distinguished from other electric motors by a voltage property value: one motor may have a voltage value or 220 V; another motor may have a voltage value of 110 V; other motors may have other voltage values.

Items can be any goods or products within a company. A company needs to know which products are available in stock, for example for production planning. In case a certain item is needed, a user can specify the item he or she is seeking and generate a user request. While specifying the item, the user enters into a local system property values of certain properties of the item. The properties and property values that the user specifies are defined for the particular company and may not correspond to standardized properties or property values.

For example, an engineer may be looking for a particular electric motor used within a machine. The engineer knows which characteristics the desired motor must have. The engineer may enter these characteristics into a local search system using the property values common to that local system. By entering the property values, the engineer specifies a "user request."

The local system searches for the particular electric motor specified in the user request. For example, the local system may search business objects in a local database for objects that meet the criteria--that have the specified property values--in the user request. This enables the user to find appropriate items within the company if they are in stock. In some systems, if the requested item is out of stock, the user may need to fill out an order request, which may be processed by a buying department. The buying department may contact individual suppliers to determine whether any one supplier can supply the desired item. When the buying department receives the order request, it may have to determine the characteristic features of the desired item and subsequently communicate to each supplier which type of item is required. Since each supplier may request the information regarding the requested item in a particular (and different) format, the buying department may have to individually format the order request for each supplier.

The above-mentioned method may be inconvenient for users. It may be cost-intensive and may lead to loss of information within the supply chain. Known information may not be used efficiently.

### SUMMARY

To overcome one or more of these problems, according to one embodiment, a method for searching items may include using a request broker. The method may comprise receiving a user request for an item comprising property values of local system properties, searching within the local system for an item in compliance with the user request, and in the event that no such item is found in the local system, mapping the properties and property values of the user request into a standardized data structure of a search request and providing the search request to a request broker.

Some embodiments allow users to specify searched items in a known manner. For example, users may simply enter the property values with which the searched item needs to comply. The local system may be arranged for searching within its own databases and/or search engines regardless of whether the respective item with the required characteristics is available or in stock. If the item is in stock, the user may receive a confirmation together with further information, for example, about the item ID and the storage location.

If the item is not in stock, the available information, which has already been entered by the user, may be used to generate a request for the item automatically. According to some embodiments, the already available information about the item may be mapped into a standardized data structure. The standardized data structure can be any within any suitable classification scheme, such as, for example, eCl@ss, or UN/SPSC. The mapping can also be done using XML or any other structured query language that allows transmitting and storing the data within an agreed-upon standard format.

In one embodiment, the request broker may be a networked computer device that is connected to both the local system and to a larger network. For example, the request broker could be a networked computer in a supply chain that connects a company to one or more of the company's suppliers. The request broker could also connect to third parties other than the company's current suppliers. In one embodiment, when the request broker receives a search request from the local system, it may send the search request to one or more suppliers. In one embodiment, the request broker may grant one or more suppliers or one or more other third parties access to the search request.
The access may be provided through a particular interface.

Thus, the request broker can provide the search request to one or more third parties by transmitting the search requests to third parties or the request broker can provide the third parties with access, possibly through an interface, to the search requests. Transmitting the search request to a third party might be understood as "pushing" the search request to the third party; providing a third party with access to the search request might be understood as allowing the third party to "pull" the search request.

If the search request is in a standardized format, e.g., an agreed-upon format, a supplier or a third party can receive a search request with no further translation.

According to some embodiments, the standardized data structure comprises standardized properties. For example, the standardized data structure for an electric motor supply chain may always include properties for voltage, power, frequency and torque. The standardized data structure may also comprise standardized property values. In the example above, property values for voltage may be standardized to be only 110 V, 220V or 440V, in one embodiment; frequency values may be standardized to be either 50 Hz or 60 Hz, in one embodiment. In addition, some classification standards define the format of search requests. A classification scheme can provide uniform names for properties and property values. Both the standardized properties and the standardized property values can facilitate efficient communication between one system and another system without the need to reformat or translate the data. To further enable identifying the type of item that is searched for, some embodiments may categorize the search requests. Some embodiments may structure the standardized data structure to fit within a standardized classification scheme. In addition, the names and format of property values may be defined. This may be the format of numbers, the units for measures used, or other formal requirements.

Some embodiments provide classifying the search request depending on its properties and property values. A classification scheme may permit the local system or the request broker to determine a particular class for the search request from the properties that are defined in the search request. For example, in some embodiments, each class of the classification scheme may be made up of at least two different properties and may have a class name. Comparison of the properties of the class with the properties of the search request may allow the local system or the request broker to determine an appropriate class for the search request.

Some embodiments may map the property values to the search request within an interface between the local system and the request broker, for example, in a computer program product that accesses both the local system and the request broker. The interface may transform a user request having the format of the local system to a search request with a standardized format.

The interface may also transfer a search result provided by a third party, via the request broker, to the local system. The interface may reformat the search result to the format of the local system.

To identify a search request unambiguously, some embodiments may assign a unique identifier to the search request. Once a supplier or third party finds a match for the search request, the supplier can report this to the request broker using the unique identifier. The request broker may use an identifier to link a particular search result to a particular search request; the request broker may report the search result to the requesting system along with the identifier.

Because the types of search requests can vary and because not all suppliers and third parties may have interest in receiving all search requests, some embodiments provide selectively provide the search request to the suppliers or third parties depending on a category of the search request. For example, a supplier of machines may not need to receive search requests concerning food, and vice versa. Some embodiments may classify search requests based on the underlying content of the corresponding user request. Therefore, in some embodiments, search requests relating to a particular type of item may only be provided to third parties that might be able to find the item within their systems.

Some embodiments may also provide a method for a third party to "register with" or provide descriptive information about the third party to the request broker. The descriptive information may include, for example, the categories of search requests that should be provided to the respective third party.

To enable a local system or a request broker to automatically provide search requests in certain categories to suppliers or third parties that have products in those categories, the request broker in some embodiments may also categorize the third parties.

In some embodiments, once an item has been found by a supplier or a third party, the supplier or third party may report the search result to the request broker, and the request broker may report the search result to the searching system. In response, the searching system may automatically order the item from the respective supplier or third party. In some embodiments, the request broker may receive search results from the third parties that include a specification of the located item together with a price, which may allow the requesting system to determine whether to order the item from the respective third party or not.

One aspect is a computer program product for searching items using a request broker. The computer program product may comprise instructions operable to cause a processor to receive a user request for an item comprising property values of local system properties, to search within the local system for items in compliance with the user request, and in the event that no such item is found in the local system, to map the properties and property values of the user request into a standardized data structure of a search request to be further used by a request broker.

One aspect is a computer system for searching for items using a request broker. The system may comprise a local database, a local computer device that is coupled to the local database, at least one third-party database, at least one third-party computer device that is coupled to the at least one third-party database, a request broker that is coupled to the local computer device and to the at least one third-party device and a computer program product.

The local computer device may receive a user request comprising search criteria.

The computer program product may include executable instructions that when executed, cause the computer system to perform operations comprising:
a) searching the local database, upon receiving a user request comprising search criteria, for an item in the local database that matches the search criteria; and
b) if no item is found in the local database that matches the search criteria, mapping the search criteria to a standardized search request;
c) providing, via the request broker, the search request to at least one third-party computer device so that the at least one third-party computer device can search for an item matching the search request in the at least one third-party database;
d) receiving, in response to the search request, any search results from the at least one third-party computer device; and
e) transmitting received search results to the local computer.

In one embodiment, the local database is stored on the local computer device. In another embodiment, the local database is coupled to the local computer device by a local area network (LAN).

In one embodiment, the request broker is another computer device that is coupled to the local computer device and to the at least on third-party computer device. In another embodiment, the request broker is coupled to the local computer device by a LAN or by a wide area network (WAN) or by both a LAN and WAN. Similarily, the request broker may coupled to the third-party computer device by either a LAN or by a WAN or by both a LAN and a WAN.

In one embodiment, the request broker is a computer program product that is executed by the local computer device.

In one embodiment, the executable instructions that cause the computer system to map the search criteria to the standardized search request are executed by the local computer device. In another embodiment, the executable instructions that cause the computer system to map the search criteria to the standardized search request are executed by the request broker.

The details of one or more embodiments are set forth in the accompanying drawings and in the description below. Other features, objects and advantages will be apparent from the description and drawings, and from the claims.

### BRIEF DESCRIPTION OF THE DRAWINGS

In the Figures,
- FIG. 1: is an illustration of a computer system that can be used to implement the methods described herein, according to one embodiment;
- FIG. 2: is a further illustration of the computer system shown in FIG. 1, according to one embodiment; and,
- FIG. 3: is an illustration of a local computer system shown in FIG. 2, according to one embodiment;
- FIG. 4: is an illustration of a request broker shown in FIG. 3, according to one embodiment;
- FIG. 5a: is a user request format for processing user requests locally, according to one embodiment;
- FIG. 5b: is a search request for processing external search requests, according to one embodiment;
- FIG. 6: is a flowchart of method of searching for an item, according to one embodiment.

### DETAILED DESCRIPTION

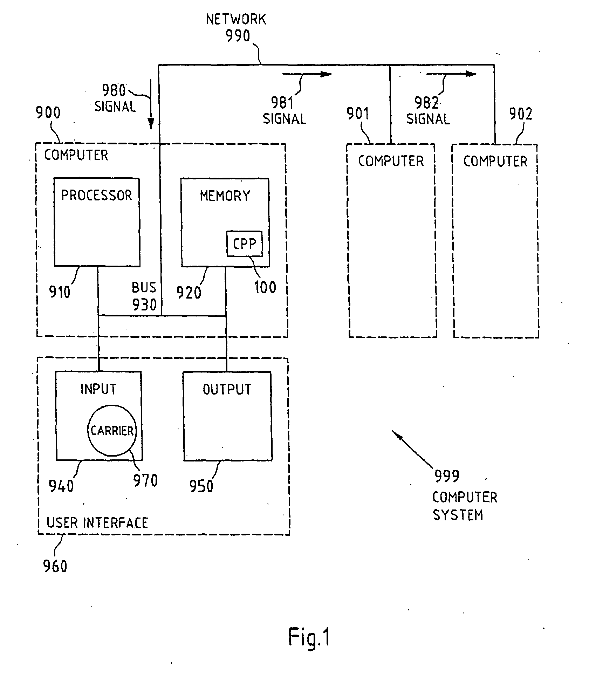

In FIGs 1-6 reference numbers 100/200, 110/210 can denote similar elements, the function of these elements can be different.

FIG. 1 illustrates a simplified block diagram of exemplary computer system 999 having a plurality of computers 900, 901, 902 (or even more).

Computer 900 can communicate with computers 901 and 902 over network 990. Computer 900 has processor 910, memory 920, bus 930, and, optionally, input device 940 and output device 950 (I/O devices, user interface 960). As illustrated, the invention is implemented by computer program product 100 (CPP), carrier 970 and signal 980. With respect to computer 900, computer 901/902 is sometimes referred to as a "remote computer." Computer 901/902 is, for example, a server, a peer device, or other common network node, and typically has many or all of the elements described for computer 900.

Computer 900 is, for example, a conventional personal computer (PC), a desktop device or a hand-held device, a multiprocessor computer, a pen computer, a microprocessor-based or programmable consumer electronics device, a minicomputer, a mainframe computer, a personal mobile computing device, a mobile phone, a portable or stationary personal computer, a palmtop computer or the like.

Processor 910 is, for example, a central processing unit (CPU), a micro-controller unit (MCU), digital signal processor (DSP), or the like.

Memory 920 is comprised of elements that temporarily or permanently store data and instructions. Although memory 920 is illustrated as part of computer 900, memory can also be implemented in network 990, in computers 901/902, and in processor 910 itself (e.g., cache, register), or elsewhere. Memory 920 can be a read-only memory (ROM), a random-access memory (RAM), or a memory with other access options. Memory 920 is physically implemented by computer-readable media, for example: (a) magnetic media, like a hard disk, a floppy disk, or other magnetic disk, a tape, a cassette tape; (b) optical media, like optical disk (CD-ROM, digital versatile disk - DVD); (c) semiconductor media, like DRAM, SRAM, EPROM, EEPROM, or memory stick.

Optionally, memory 920 is distributed. Portions of memory 920 can be removable or non-removable. For reading from media and for writing to media, computer 900 uses well-known devices, for example, disk drives, or tape drives.

Memory 920 stores modules such as, for example, a basic input output system (BIOS), an operating system (OS), a program library, a compiler, an interpreter, and a text-processing tool. Modules are commercially available and can be installed on computer 900. For simplicity, these modules are not illustrated.

CPP 100 has program instructions and, optionally, data that cause processor 910 to execute method steps of the present invention. In other words, CPP 100 can control the operation of computer 900 and its interaction in network system 999 so that it operates to perform in accordance with the invention. For example and without the intention to be limiting, CPP 100 can be available as source code in any programming language, and as object code ("binary code") in a compiled form.

Although CPP 100 is illustrated as being stored in memory 920, CPP 100 can be located elsewhere. CPP 100 can also be embodied in carrier 970.

Carrier 970 is illustrated outside computer 900. For communicating CPP 100 to computer 900, carrier 970 is conveniently inserted into input device 940. Carrier 970 is implemented as any computer readable medium, such as a medium largely explained above (cf. memory 920). Generally, carrier 970 is an article of manufacture having a computer-readable medium with computer-readable program code to cause the computer to perform methods of the present invention. Further, signal 980 can also include computer program product 100.

Having described CPP 100, carrier 970, and signal 980 in connection with computer 900 is convenient. Optionally, further carriers and further signals embody computer program products (CPP) to be executed by further processors in computers 901 and 902.

Input device 940 provides data and instructions for processing by computer 900. Device 940 can be a keyboard, a pointing device (e.g., mouse, trackball, cursor direction keys), microphone, joystick, game pad, scanner, or disc drive. Although the examples are devices with human interaction, device 940 can also be a device without human interaction, for example, a wireless receiver (e.g., with satellite dish or terrestrial antenna), a sensor (e.g., a thermometer), or a counter (e.g., a goods counter in a factory). Input device 940 can serve to read carrier 970.

Output device 950 presents instructions and data that have been processed. For example, this can be a monitor or a display, cathode ray tube (CRT), flat panel display, liquid crystal display (LCD), speaker, printer, plotter, or vibration alert device. Output device 950 can communicate with the user, but it can also communicate with other computers.

Input device 940 and output device 950 can be combined into a single device. Any device 940 and 950 can be provided optionally.

Bus 930 and network 990 provide logical and physical connections by conveying instruction and data signals. While connections inside computer 900 are conveniently referred to as "bus 930," connections between computers 900 and 902 are referred to as "network 990." Optionally, network 990 includes gateways, which are computers that specialize in data transmission and protocol conversion.

Devices 940 and 950 are coupled to computer 900 by bus 930 (as illustrated) or by network 990 (optionally). While the signals inside computer 900 are mostly electrical signals, the signals in network 990 are electrical, electromagnetic, optical or wireless (radio) signals.

Networks are commonplace in offices, enterprise-wide computer networks, intranets and the Internet (e.g., the world wide web (WWW)). Network 990 can be a wired or a wireless network. To name a few network implementations, network 990 can be, for example, a local area network (LAN) ; a wide area network (WAN); a public switched telephone network (PSTN); an Integrated Services Digital Network (ISDN); an infrared (IR) link; a radio link, like Universal Mobile Telecommunications System (UMTS), Global System for Mobile Communication (GSM), or Code Division Multiple Access (CDMA); or a satellite link.

A variety of transmission protocols, data formats and conventions is known; for example, transmission control protocol/internet protocol (TCP/IP), hypertext transfer protocol (HTTP), secure HTTP, wireless application protocol (WAP), unique resource locator (URL), a unique resource identifier (URI), hypertext markup language (HTML), extensible markup language (XML), extensible hypertext markup language (XHTML), wireless markup language (WML), and Standard Generalized Markup Language (SGML) .

Interfaces coupled between the elements are also well known in the art. For simplicity, interfaces are not illustrated. An interface can be, for example, a serial port interface, a parallel port interface, a game port, a universal serial bus (USB) interface, an internal or external modem, a video adapter, or a sound card.

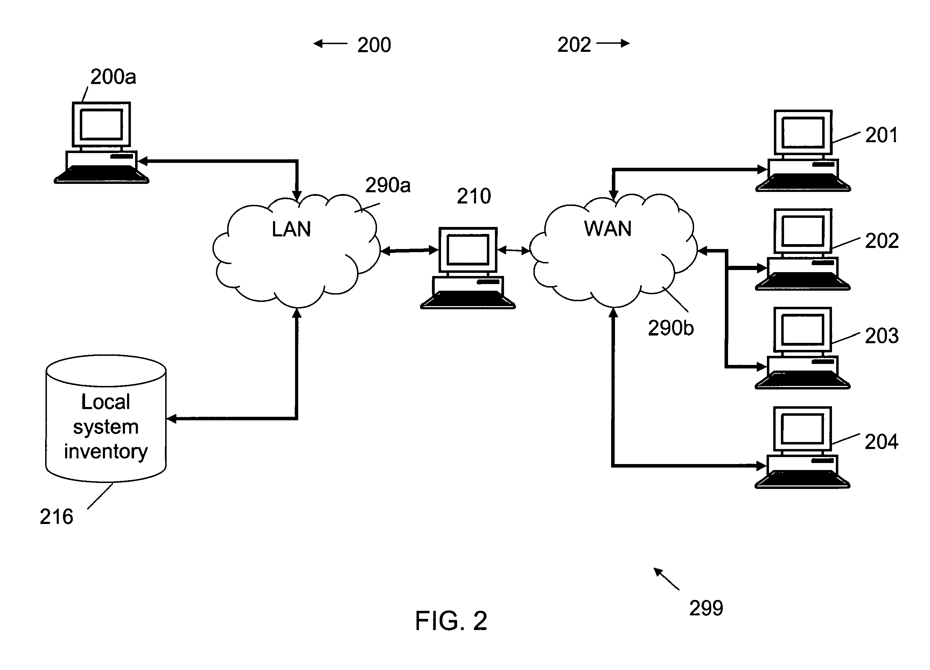

Figure 2 illustrates one embodiment of a computer system 299 for implementing the methods described herein. The computer system 299 may comprise a local system 200, and an external system 202. The local system 200 can comprise at least one computer 200a, a local area network (LAN) 290a, and a local system inventory 216-for example, an inventory database.

The external system can comprise a request broker 210, a wide area network 290b, and supplier or third party systems 201-204.

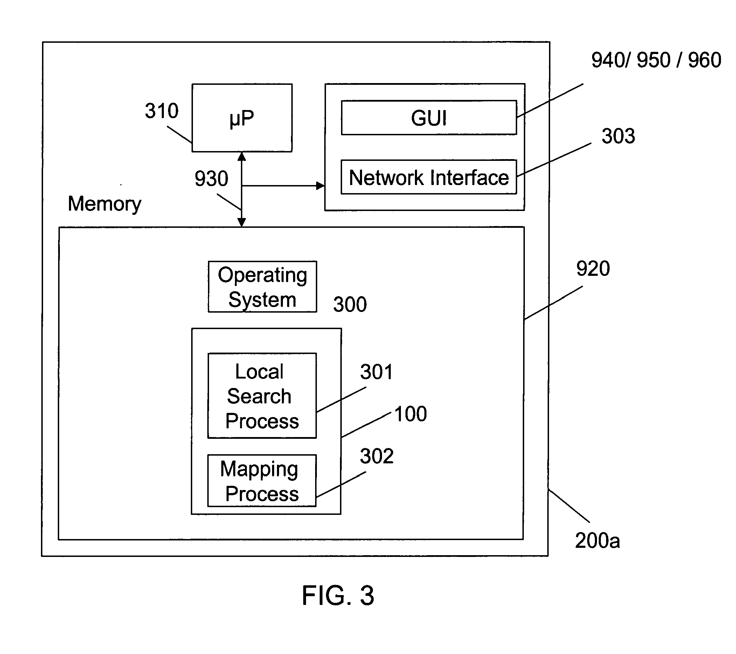

The local computer 200a is illustrated in more detail in FIG. 3. The local computer 200a comprises a user interface 940/950/960 and a network interface 303. The local computer 200a further comprises a microprocessor for running within an operating system 300 a computer program product 100. The computer program product 100 can comprise processing code for a local search process 301 and a mapping process 302.

The computer program product 100 for implementing the methods described herein, according to one embodiment, can be provided within local computer 200a, or request broker 210, or distributed over both 200a, 210.

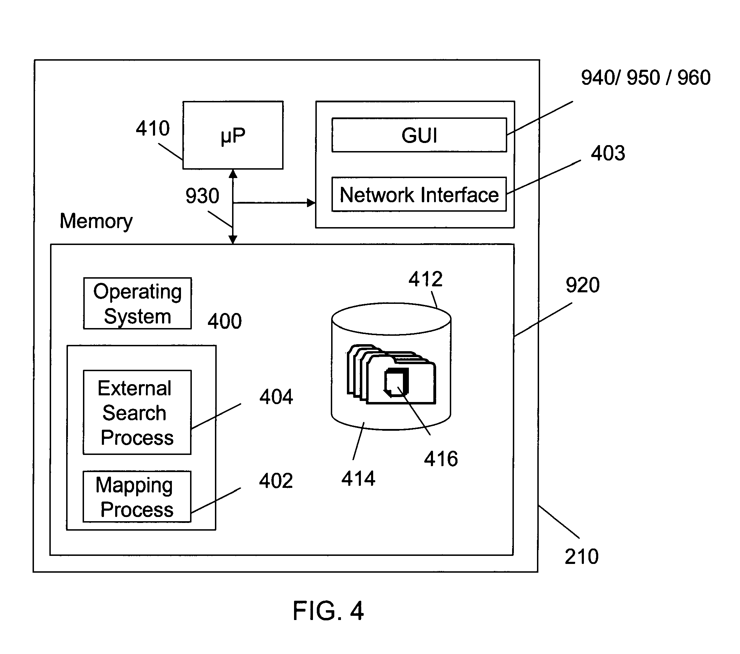

The request broker 210 is illustrated in more detail within FIG. 4. It may include a database 412. The database 412 can store search requests 416, according to one embodiment. The search requests 416 may be categorized in the database 212 into different categories 414. This categorization can be done based on the classification of the search request.

The request broker may operate through its operating system 400 an external search process 404 and a mapping process 402. It is noted that the mapping process can be carried out in the local computer 200a or the request broker 210

The request broker 210 may be coupled to supplier or third party systems 201-204 via its network interface 403 with a wide area network (WAN) 290b, allowing communication between the request broker 210 and the supplier or third party systems 201-204.

In one embodiment, the request broker may also be connected using its network interface 403 to the local system 200 via a LAN 290a. In another embodiment, the request broker may be connected to the local system 200 via both a WAN and a LAN. The request broker can be located within the local system 200 or within the external system 202.

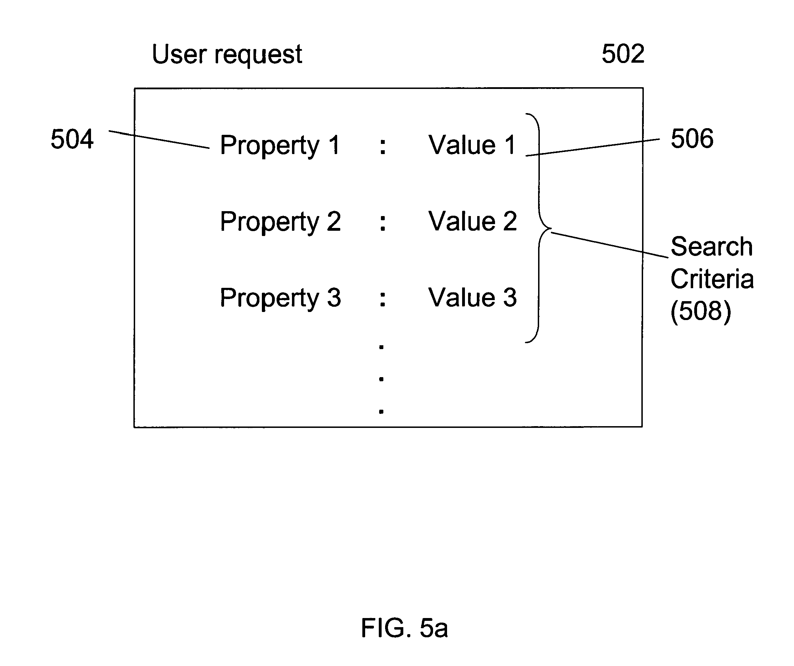

A possible user request is illustrated in FIG. 5a. The user request 502 can comprise properties 504 and property values 506, which in combination can constitute search criteria 508.

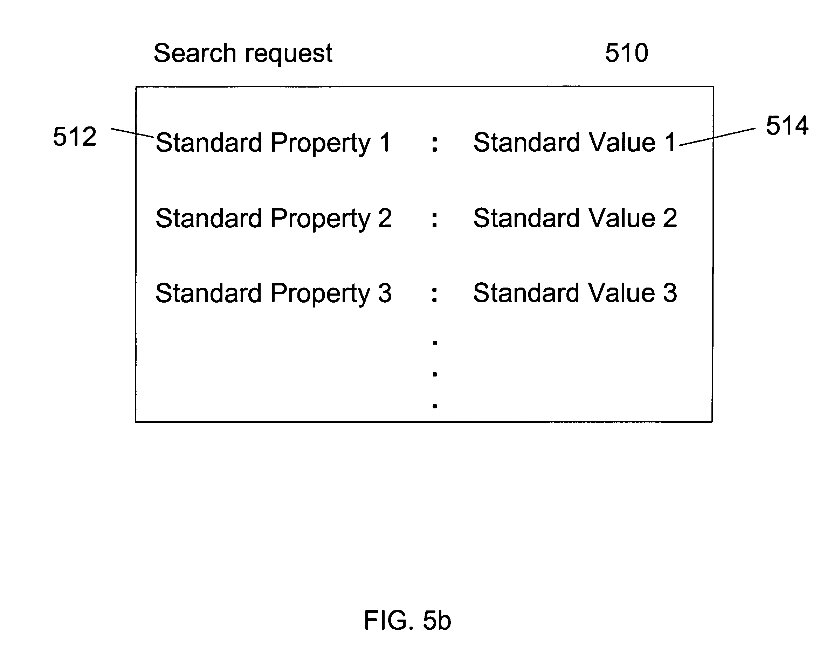

A possible search request is illustrated in FIG. 5b. The search request 510 can comprise standard properties 512 and standard property values 514.

Methods according to embodiments can be carried out on the system as illustrated in the FIGs 1 to 5 as follows.

The local computer 200a may receive a user request 502 from a GUI 960, wherein the search request can comprise search criteria 508. For example, an engineer may generate a user request 502 comprising search criteria 508 for an electric motor from on the local computer 200a. The search criteria 508 may include one or more properties 504 and one or more corresponding property values 506. In response to the user request, a local search process 301 may cause the processor 310 to search the local system 200 for an item that meets the search criteria 508. For example, the search process 301 may cause the processor 310 to search a local system inventory database 216 for the electric motor the engineer was seeking.

In the event that the processor 310, running the local search process 301, does not find the item in the local system 200, the processor 310 may run a mapping process 302. The mapping process 302 may translate the search criteria 508 into a standardized form. For example, the mapping process 302 may translate the property 504 in the user request 502 to a standardized property 512 in a standardized search request 510 with standardized property values 514. The search request 510 can then be provided through the network interface 303 to a request broker 210 in the external system 202, through the LAN 290a. The local system properties can be proprietary system properties, or any other locally agreed on properties.

The mapping of the user request 502 to the search request 510 can also be done in the external system, for example by the request broker 210. In the event that the processor 310, running the local search process 301, does not find the item in the local system 200, the processor 310 may the provide the user request 302 through the network interface 303 to the request broker 210 in an external system 202. Within the request broker 210, the processor 410 can run a mapping process 402. The mapping process 402 may translate the search criteria 508 into a standardized form. For example, the mapping process 402 may translate the property 504 in the user request 502 to a standardized property 512 in a standardized search request 510 with standardized property values 514.

Once the search request 510 is available in the request broker 210, it may be stored in the database 412. The stored search requests 416 may be categorized in the database 412 into different categories 414.

The stored search requests 416 can be used to run an external search process 404. For example, the external search process can send the search request 510 through its network interface 403 to suppliers 201-204 through a wide area network 290b. The suppliers 201-204 may each search for items that match the search request.

In case an item is found by a supplier 201-204, the supplier 201-204 can send a search result through WAN 290b to the request broker 210. The request broker 210 can provide the search result to the local system 200 through network interface 403 and LAN 290a. The local computer 200a can receive the search result and can present the engineer, through GUI 260, with the result.

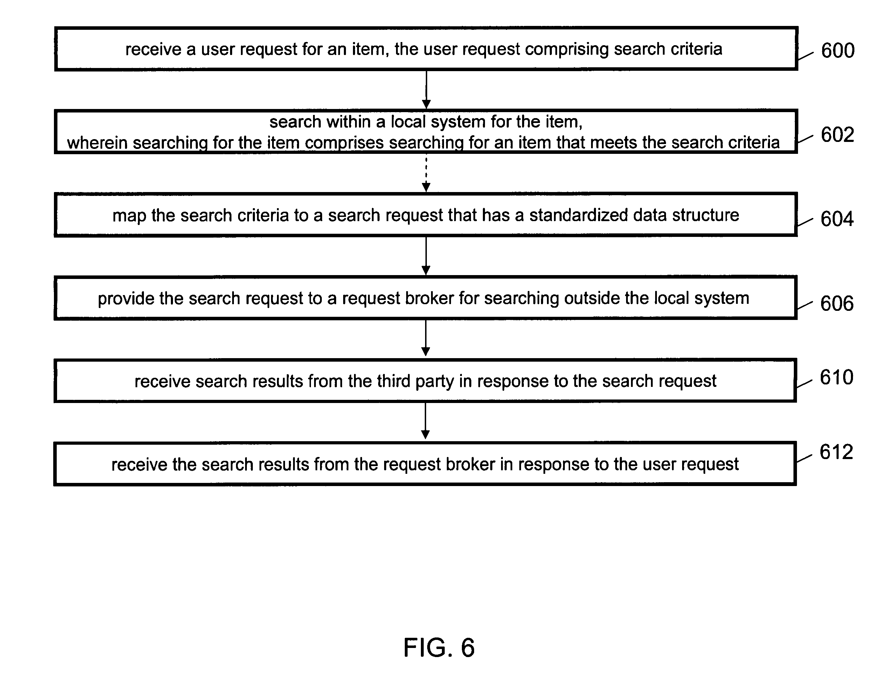

FIG 6 illustrates a flowchart of one implementation of a method for searching items using a request broker.

Receiving (600) a user request 502 for an item comprising property values 506 of local system properties 504 is provided. The user request 502 can be entered by a user of a local computer 200a into the user interface 940. Within the user request 502, the user can specify an item he or she is seeking. The specification of the item comprises values 506 of local system properties 504.

The user request can be used for searching (602) within the local system 200 for items in compliance with the user request. This search can be carried out in local system inventory databases 216 or using local search engines. The search can be carried out using a local search process 301.

In the event that no such item is found in the local system, the processor 310 of the local computer 200 can start (604) a mapping process 302 for mapping the search criteria 508 of the user request 502 into a standardized data structure of a search request 510. The mapping process 302 can be carried within the local computer 200 or the request broker 210.

During the mapping process 302/402, the respective properties 504 of the local system are mapped into properties 512 of an agreed-upon standard. The standard can be mutually agreed-upon or globally agreed-upon. The standardized data structure of the search request 510 can comprise standardized properties 512 and/or standardized property values 514.

When mapping (604) the user request into the search request it is possible to classify the standardized data structure with a standardized classification. This classification can be based on the properties and property values of the search request.

The mapped properties can be provided (606) to the request broker 210 from the local computer 200a via the network interface 303 and the local area network 290a. The reques broker 210 can receive the search request 510 via its network interface 403. The processor 410 can start a search process 404 to search outside the local system 200 for items that match the search request 510. To allow identifying the search requests, for example when they are stored in the database 412, each search request 510 can be assigned an identification.

The search request 510 can then be provided from the request broker to third parties 201-204. This provision to third parties 201-204 can comprise distributing the search request 510 to third parties 201-204 and/or providing the third parties 201-204 access to the search request 510 stored in the request broker 210.

When distributing the search requests to third parties, an interface 403 for third parties 201-204 within the request broker 210 to provide access to the search request 510 is provided.

As the search requests 510 might not be intended to be directed to all third parties 201-204, it is possible to selectively provide search requests 510 to third parties 201-204 depending on the category of the search request 510.

To allow identifying the third parties 201-204 within the request broker 210, registering the third parties 201-204 within the request broker 210 can be provided. The third parties 201-204 can also be categorized within the request broker 210.

After having provided the third parties 201-204 with the search requests 510, the third parties 201-204 can search within their local systems for appropriate items. Once an item has been found the request broker receives (610) search results from the third parties for a search request 510.

The request broker 210 forwards (612) the search results from the third party 201-204 to the local system 200 through its interface 403 and local area network 290a.

The processor 410 within request broker 210 or the processor 310 within the local computer 200a can start the mapping process 402, 302 to map the search result into a local system format.

## Claims

1. A method for searching for an item, the method comprising:
- receiving a user request for an item, the user request comprising search criteria;
- searching within a local system for the item, wherein searching for the item comprises searching for an item that meets the search criteria;
- in the event that no item is found within the local system that meets the search criteria, the method further comprises:
- mapping the search criteria to a search request that has a standardized data structure; and
- providing the search request to a request broker for searching outside the local system.

2. The method of claim 1, wherein the search criteria comprise properties and property values associated with the item.

3. The method of claim 1, wherein providing the search request to the request broker comprises providing the search request to a third party.

4. The method of claim 3, wherein providing the search request to a third party comprises at least one of:
A) transmitting the search request to the third party; and
B) granting the third party access to the search request.

5. The method of claim 3, wherein the request broker receives descriptive information about the third party.

6. The method of claim 5, wherein the request broker assigns a category to the third party based on the descriptive information.

7. The method of claim 6, wherein providing the search request to the third party comprises providing the search request to the third party based on at least one of:
A) the category; and
B) the search criteria.

8. The method of claim 3, further comprising the request broker receiving search results from the third party in response to the search request.

9. The method of claim 8, further comprising receiving the search results from the request broker in response to the user request.

10. The method of claim 1, wherein the standardized data structure comprises at least one of:
A) standardized properties; and
B) standardized property values.

11. The method of claim 1, further comprising classifying the search request based on the search criteria.

12. The method of claim 11, wherein classifying the search request comprises classifying the search request according to a standardized classification.

13. The method of claim 1, further comprising assigning a unique identifier to the search request.

14. A computer program product tangibly embodied in an information carrier, the computer program product comprising instructions that, when executed, cause at least one processor to perform operations comprising:
- receiving a user request for an item, the user request comprising search criteria;
- searching within a local system for the item, wherein searching for the item comprises searching for an item that meets the search criteria;
- in the event that no item is found within the local system that meets the search criteria, the method further comprises:
- mapping the search criteria to a search request that has a standardized data structure; and
- providing the search request to a request broker for searching outside the local system.

15. A computer system for searching for items using a request broker, the computer system comprising:
- a local database;
- a local computer device that is coupled to the local database and that can receive a user request comprising search criteria;
- at least one third-party database;
- at least one third-party computer device that is coupled to the at least one third-party database;
- a request broker that is coupled to the local computer device and to the at least one third-party device;
- a computer program product including executable instructions that when executed, cause the computer system to perform operations comprising:
a) searching the local database, upon receiving a user request comprising search criteria, for an item in the local database that matches the search criteria; and
b) if no item is found in the local database that matches the search criteria, mapping the search criteria to a standardized search request;
c) providing, via the request broker, the search request to at least one third-party computer device so that the at least one third-party computer device can search for an item matching the search request in the at least one third-party database;
d) receiving, in response to the search request, any search results from the at least one third-party computer device; and
e) transmitting received search results to the local computer.
